# EUROPEAN PATENT APPLICATION

(11) **EP 4 578 832 A1**
(43) Date of publication of application: **02.07.2025**
(21) Application number: 24217576.8
(22) Date of filing: 04.12.2024
(51) Int. Cl.: C02F 1/00, C02F 1/48, C02F 1/68, C02F 1/463, C02F 101/20, C02F 103/02, C02F 1/461

(54) **A WATER TREATMENT UNIT**

(30) Priority: 04.12.2023 GB 202318519
(71) Applicant: International Water Treatment Maritime AS, 3470 Slemmestad (NO)
(72) Inventor: EBBESTAD, Geir Qvam, Slemmestad (NO)
(74) Representative: Rogan, Jack William

(57) **Abstract**

The present application relates to a water treatment unit for improving the quality of water in a water system. The water treatment unit comprises a container, a magnet, a sacrificial anode, and a filter element. The container comprises an inlet and an outlet configured to allow water to flow into and out of the container, respectively. The outlet is located above the inlet. The magnet is configured to attract ferrous particles and retain ferrous particles to remove the ferrous particles from the water flowing through the container. The sacrificial anode is configured to provide cathodic protection and scavenge oxygen from the water flowing through the container. The filter element is configured to remove detritus from the water flowing through the container. The magnet, sacrificial anode, and the filter element are located within the container.

## Description

### Technical Field

The present invention relates to a water treatment unit for improving the quality of water in a water system.

### Background of the Invention

It is known that water systems in land and marine installations that are used for heating and/or cooling suffer from adverse effects as a result of poor water quality. When poor-quality water circulates within a water system, the conditions for corrosion are often present. Corrosion of components of the water system can lead to malfunction of the water system, which can require expensive repairs. Furthermore, corrosion products can coat surfaces of elements within the water system and reduce the efficiency of the heat transfer components.

### Summary

In one aspect of the present invention, there is provided a water treatment unit for improving the quality of water in a water system. The water treatment unit comprises a container having an inlet and an outlet configured to allow water to flow into and out of the container, respectively, wherein the outlet is located above the inlet, a magnet configured to attract ferrous particles and retain ferrous particles to remove the ferrous particles from the water flowing through the container, a sacrificial anode configured to provide cathodic protection and scavenge oxygen from the water flowing through the container, and a filter element configured to remove detritus from the water flowing through the container. The magnet, sacrificial anode, and filter element are located within the container.

Thus, the present invention provides an advantageous water treatment unit for cleaning water in a water system and preventing, or at least reducing, corrosion of the water system. The sacrificial anode may be configured to provide anodic treatment and as a result provide a cathodic reaction. In addition, by locating the outlet above the inlet, the water treatment unit provides greater resistance against larger ferrous particles and detritus moving through the water treatment unit. Thus, the larger particles can be collected at the bottom of the water treatment unit to be drained and removed from a water system during maintenance.

In some embodiments, the container may comprise a splitting element that extends across the container and divides the container into an inlet section comprising the inlet and an outlet section comprising the outlet, wherein the splitting element comprises an aperture configured to allow water to flow from the inlet section of the container to the outlet section of the container.

Advantageously, the splitting element causes water in the water treatment unit to flow in the same direction through the aperture. This causes the water to flow cyclonically, which encourages the separation of gas and heavier particles from the water in the water treatment unit.

In some embodiments, the sacrificial anode may be located in the outlet section of the container. Thus, the sacrificial anode may be located downstream of the at least one magnet. Therefore, the ferrous particles have already been removed from the flow of water and cannot damage the sacrificial anode. Furthermore, all water must pass by the sacrificial anode before it can exit the water treatment unit. Thus, most of the oxygen can be removed from the water in the water treatment unit.

In some embodiments, the filter element may be located in the outlet section of the container. In some embodiments, the filter element may extend from the splitting element into the outlet section of the container. In some embodiments, the filter element may extend from the splitting element to a top wall of the container. Thus, all water that enters the water treatment unit must pass through the filter element. Therefore, detritus in the flow of water can be prevented from re-entering the water system

In some embodiments, the filter element may be a hollow cylindrical filter element configured such that the water flowing through the container has to pass through the filter element before the water can exit through the outlet.

In some embodiments, the filter element may be a 40 um screen. Therefore, any detritus having a dimension larger than 40 um can be removed from the flow of water re-entering the water system.

In some embodiments, the filter element may be formed from a stainless steel mesh.

In some embodiments, the filter element may be electrically connected to the container to increase the cathodic surface of the water treatment unit. Thus, the larger cathodic surface causes a large potential difference with the sacrificial anode. As a result, the reactions taking place at the sacrificial anode can occur quicker and more oxygen can be removed from the water in the water treatment unit.

In some embodiments, the sacrificial anode may be located within the hollow cylindrical filter element. Thus, any particles that are separated from the sacrificial anode can be prevented from leaving the water treatment unit.

In some embodiments, the sacrificial anode may be located above the aperture in the splitting element. Thus, water flowing through the aperture may be directed directly at the sacrificial anode to ensure the water flowing from the inlet section has its oxygen content removed.

In some embodiments, the sacrificial anode may be an unmeshed anode. In some embodiments, the sacrificial anode may be formed from magnesium.

In some embodiments, the magnet may be located in the inlet section of the container.

In some embodiments, the magnet may be located proximate to the inlet of the container.

In some embodiments, the magnet may be located in a magnet housing. In some embodiments, the magnet housing may extend into the inlet section of the container from the bottom wall of the container. Thus, the ferrous particles may be prevented from directly contacting the magnet, which avoids any contact damage. In addition, the magnet may be easily replaced.

In some embodiments, the magnet or magnet housing may be a flow diverter configured to induce a vortex in the water flowing into the inlet section of the container to improve separation efficiency.

In some embodiments, the magnet may be formed from neodymium, and optionally comprises a stainless steel coating.

In some embodiments, the water treatment unit may further comprise a drain located in a bottom wall of the container, the drain comprising a drain pipe and a drain valve configured to allow the container to be drained. Thus, all the ferrous particles and detritus collected at the bottom of the container can be removed. Furthermore, when water is blown through the filter in the opposite direction, the filtered detritus can also be removed from the container.

In some embodiments, the water treatment unit may further comprise an air vent located in the top wall of the container, the air vent being configured to allow micro bubbles to exit the container.

In another aspect of the present invention, there is provided a water system comprising a water treatment unit according to any one of claim 1 to claim 22.

### Brief Description of the Drawings

So that the present invention may be more fully understood, embodiments of the present invention will now be described, by way of example only, with reference to the accompanying drawings, in which:
Fig. 1 shows a front view of a water treatment unit;
Fig. 2 shows an exploded perspective view of the water treatment unit of Fig. 1;
Fig. 3 shows a cross-sectional front view of the water treatment unit;
Fig. 4 shows a cross-sectional perspective view of the water treatment unit; and
Fig. 5 shows a schematic view of a water treatment system comprising the water treatment unit.

### Detailed Description

Water systems in land and marine installations that are used for heating and/or cooling suffer from adverse effects resulting from poor water quality. When the quality of the water within a water system is poor, the conditions for corrosion are often present.

The main conditions that allow for corrosion of elements of a water system to take place include the water having a low pH, the water having a high oxygen content, and water containing a high amount of minerals that lead to a high conductivity.

When these conditions are present, elements of a water system can corrode. Not only can corrosion of elements of the water system cause damage and leaks within the system, but corrosion products can also enter into the water system. These corrosion products can cause wear on other elements, such as pumps, which can reduce the efficiency of the water system. Furthermore, in water systems responsible for the transfer of heat, i.e. heating and/or cooling systems, the corrosion products and sludge can be deposited and can build up on heat transfer elements. Thus, can further reduce the efficiency of the heating and/or cooling system.

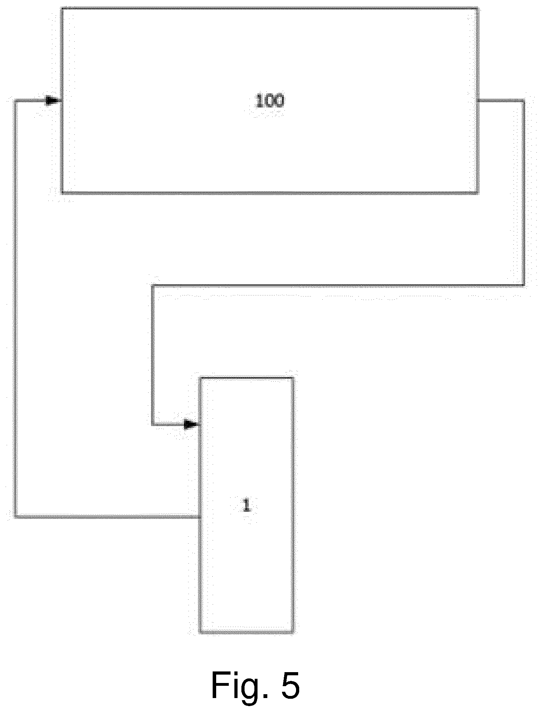

The present invention provides a water treatment unit 1 that improves the quality of the water in a water system 100, shown in Fig. 5. The water system 100 may be a heating and/or cooling system such as, for example, but not limited to, HVAC systems, technical coolers, boilers, heat pumps, solar heating, and underfloor heating. The present invention improves the quality of the water in the water system 100 by increasing the pH of the water in the water system 100, by removing or scavenging oxygen from the water in the water system 100, and by removing particles from the water in the water system 100 to lower its conductivity and keep the water clean.

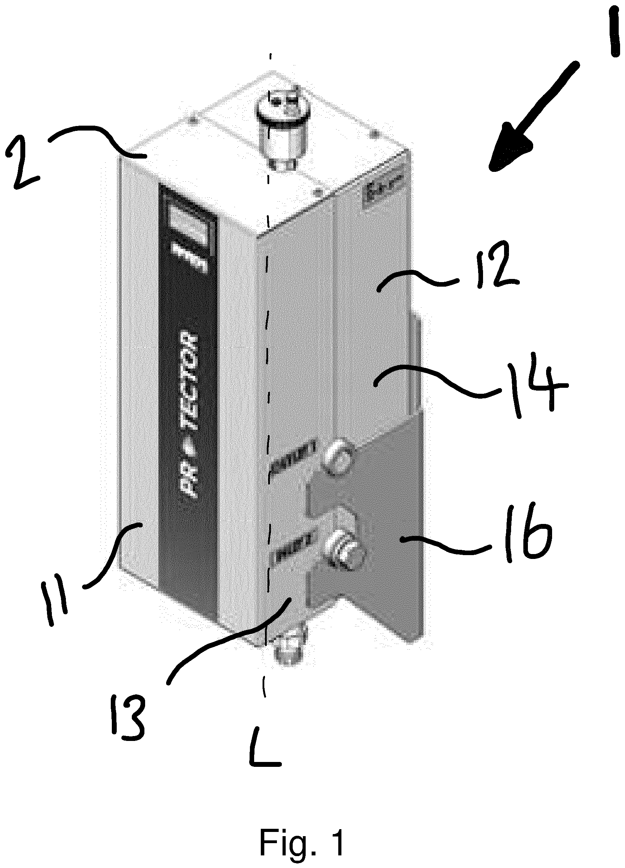

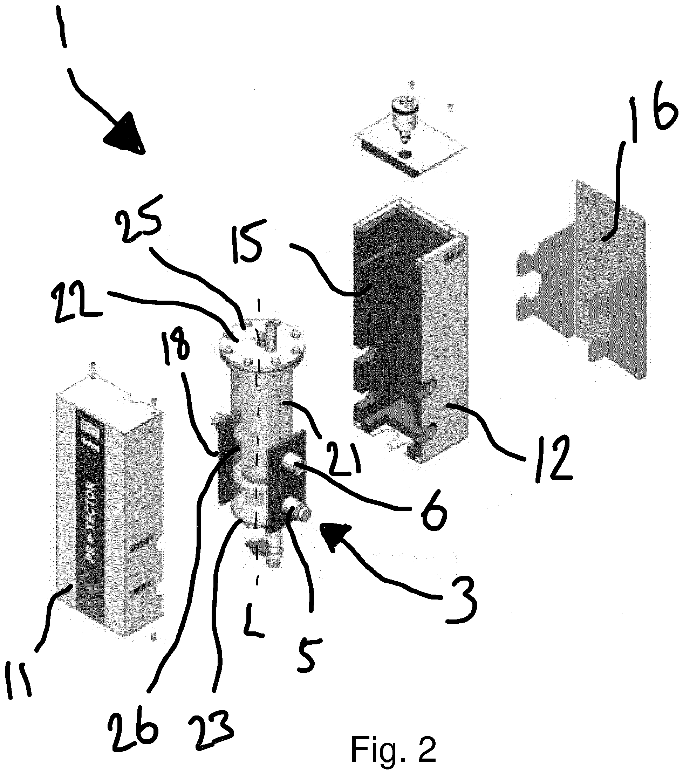

Referring now to Fig. 1 and Fig. 2, there is shown an embodiment of a water treatment unit 1. Fig. 1 shows a schematic front view of the water treatment unit 1. Fig. 2 shows an exploded view of the water treatment unit 1 of Fig. 1.

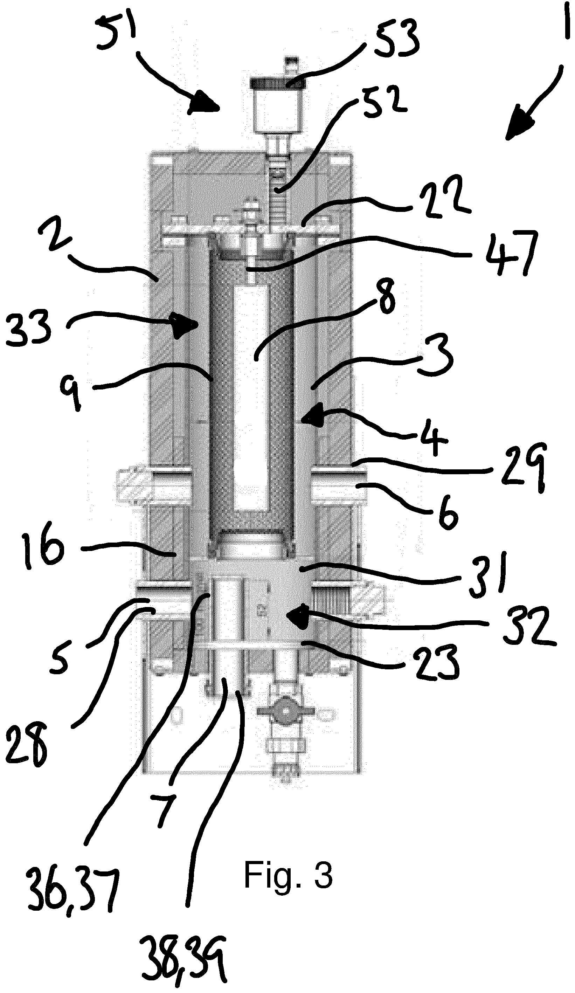

The water treatment unit 1 is configured to improve the quality of water in a water system 100, shown in Fig. 5. The water treatment unit 1 comprises a housing 2. The housing 2 may be an outer housing of the water treatment unit 1. The housing 2 may comprise a container 3, shown in Fig. 2. The container 3 may define a water receiving space 4 therein, shown in Fig. 3. In some embodiments, the housing 2 and the container 3 may be integral. The container 3 may comprise an inlet 5 and an outlet 6. The inlet 5 may be configured to allow water to flow into the water receiving space 4 in the container 3. The outlet 6 may be configured to allow water to flow out of the water receiving space 4 in the container 3.

Referring to Fig. 3, the water treatment unit 1 may further comprise a magnet 7. The magnet 7 may be configured to attract ferrous particles that are suspended in the water that flows through the water treatment unit 1. The magnet 7 may further be configured to retain the ferrous particles to remove the ferrous particles from the water flowing through the container 3 of the water treatment unit 1. The water treatment unit 1 may further comprise a sacrificial anode 8. The sacrificial anode 8 may be configured to provide cathodic protection and to scavenge oxygen from the water flowing through the container 3 of the water treatment unit 1. In addition, the water treatment unit 1 may comprise a filter element 9. The filter element 9 may be configured to remove detritus from the water flowing through the water treatment unit 1. The magnet 7, the sacrificial anode 8, and the filter element 9 are located within the container 3 of the water treatment unit 1.

In the illustrated embodiment of Fig. 1, the housing 2 is generally cuboidal. The housing may also be elongate. That is, the length of the housing 2 along its longitudinal axis L is greater than the width or depth of the housing 2. However, it will be appreciated that in alternative embodiments, the housing 2 may take a different form, for example, but not limited to cylindrical or any other polygonal prism.

In some embodiments, the housing 2 may comprise a front portion 11 and a rear portion 12. The front and rear portions 11, 12 may comprise overlapping side walls 13, 14. The inner surfaces of the front and rear portions 11, 12 may comprise a layer of insulation 15, shown in Fig. 2. The housing 2 may further comprise a wall mount 16. The wall mount 16 may be configured to be attached to a wall and support the water treatment unit 1.

In some embodiments, the housing 2 of the water treatment unit 1 may form an external shell. The walls of the external shell of the front and rear portions 11, 12 may be in the range of about 1 mm to about 1.5 mm thick. The external shell of the housing 2 may be formed from, for example, but not limited to, powder coated steel or stainless steel. In some embodiments, the layer of insulation 15 may be, for example, but not limited to, Armaflex ^{®} insulation. The layer of insulation 15 may be in the range of about 9 mm to about 19 mm thick.

Referring to Fig. 2, the container 3 may be generally cylindrical in shape. The container 3 may also be elongate. That is, the length of the container 3 along its longitudinal axis L may be greater than the width or depth of the container 2. However, it will be appreciated that in alternative embodiments, the container 3 may take a different form, for example, but not limited to, cuboidal or any other polygonal prism. The longitudinal axes of the housing 2 and the container 3 may coincide. That is, the container 3 may be located centrally within the housing 2. The container 3 may be similar in its dimensions to the housing 2. However, it will be apricated that in alternative embodiments, the shape and dimensions of the container 3 may be different to that of the housing 2.

The water treatment unit 1 may further comprise another layer of insulation 18. The layer of insulation 18 may located on the outer surface of the container 3. The layer of insulation 18 may be configured to prevent the temperature of the water within the container 3 from fluctuating and to prevent against condensation within the container 3. The layer of insulation 18 may be, for example, but not limited to, Armaflex ^{®} insulation.

The container 3 may comprise the inlet 5 and the outlet 6. That is, the inlet 5 and the outlet 6 may be formed by apertures that extend through the walls of the container 3. The inlet 5 and the outlet 6 may be configured to allow water to flow into and out of the container 3, respectively. The container 3 may comprise a cylindrical wall 21. The cylindrical wall 21 may be closed at its top end by a top wall 22. The cylindrical wall 21 may be closed at its bottom end by a bottom wall 23.

In some embodiments, the container 3 may comprise a lid portion 25, or cap 25, and a base portion 26. The lid portion 25 may be removable from the base portion 26 to enable features of the water treatment unit 1 within the container 3, such as the sacrificial anodes 8, to be removed for maintenance or to be replaced.

As previously alluded to and show in Fig. 3, the inlet 5 may be formed by an aperture extending through the cylindrical wall 16. The aperture may also extend through the layer of insulation 18, if present. The water treatment unit 1 may also further comprise an aperture in the housing 2. The aperture in the housing 2 may align with the aperture in the container 3. The water treatment unit 1 may further comprise an inlet pipe 28. The inlet pipe 28 may be in fluid communication with the inlet 5 and the water receiving space 4 of the container 3. The inlet pipe 28 may extend through the aperture forming the inlet 5 in the container 3 and the aperture in the housing 2.

The outlet 6 may also be formed by an aperture extending through the cylindrical wall 16. The aperture may also extend through the layer of insulation 18, if present. The water treatment unit 1 may also further comprise an aperture in the housing 2. The aperture in the housing 2 may align with the aperture in the container 3. The water treatment unit 1 may further comprise an outlet pipe 29. The outlet pipe 29 may be in fluid communication with the outlet 6 and the water receiving space 4 of the container 3. The outlet pipe 29 may extend through the aperture forming the outlet 6 in the container 3 and the aperture in the housing 2.

Advantageously, the positioning of the outlet 6 proximate to the top wall 22 of the container 3 means that it may be more difficult for detritus to exit the container 3. This is due to the water flow path through the water treatment unit, as will be described in more detail hereinafter. In essence, the water must flow from the inlet 5 proximate to the bottom wall 23 of the container 3 up towards the outlet 6. This may prevent larger and heavier detritus from moving with the flow of water, thus improving the quality of the water flowing out of the water treatment unit 1 and within a water treatment system 100.

In the present embodiment, the inlet 5 and the outlet 6 are shown as being on different sides of the container 3. In some embodiments, as illustrated, the container 3 may comprise a plurality of inlets 5 and a plurality of outlets 6. The plurality of inlets and outlets 6 may be circumferentially spaced around the container 3. The plurality of inlets 5 and outlets 6 may be used simultaneously, but are predominantly provided such that the water treatment unit 1 can be correctly orientated with the pipe work of an existing water system 100. Therefore, only one inlet 5 and one outlet 6 are required to be connected to the water system 100, i.e. operational, and minimal modifications to the water system 100 are required to incorporate the water treatment unit 1. The water treatment unit 1 may need to be correctly orientated so that a display, discussed in more detail hereinafter, may be viewed by an engineer. Any surplus inlets 5 or outlets 6 may be closed or block prior to fitting and/or operation of the water treatment unit 1.

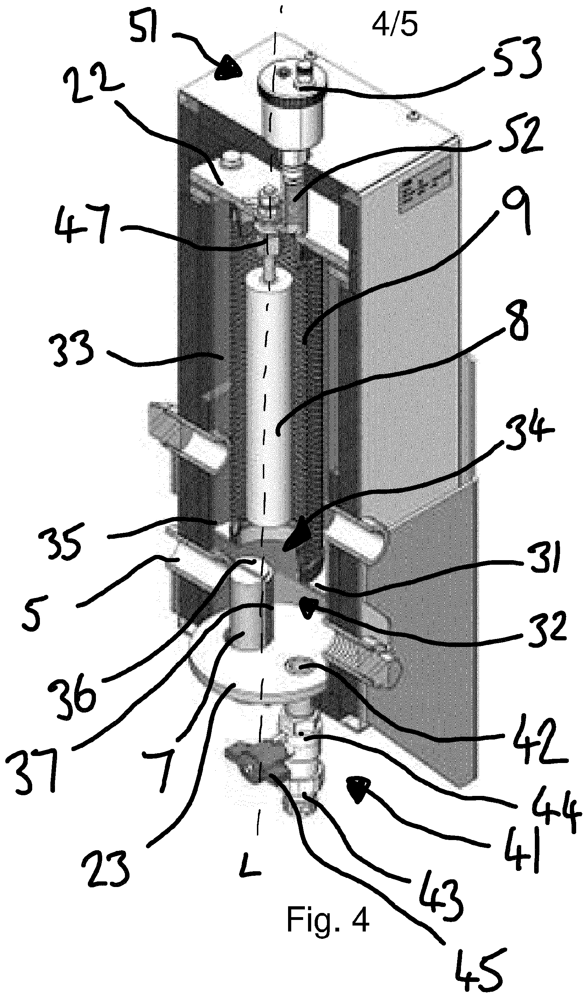

As shown in Fig. 3 and Fig. 4, the water treatment unit 1 may further comprise a splitting element 31. That is, the container 3 may comprise a splitting element 31. The splitting element 31 may extend across the container 3. The splitting element 31 may divide the container 3 into an inlet section 32 and an outlet section 33. The inlet section 32 of the container 3 may be located below the splitting element 31. The outlet section 33 of the container 3 may be located above the splitting element 31.

As shown in Fig. 4, the splitting element 31 may comprise a central aperture 34. The central aperture 34 may be configured to allow the flow of water to flow from the inlet section 32 of the container 3 to the outlet section 33 of the container 3. The central aperture 34 may have its centre aligned with the longitudinal axis L of the container 3. That is, the longitudinal axis L of the container 3 may extend through the centre of the aperture 35. The central aperture 34 may be circular. The circular central aperture 34 may be concentric with the container 3. However, it will be appreciated that in alternative embodiments, the central aperture 34 may be any other shape, such as, for example, but not limited to, triangular, square, or hexagonal.

The splitting element 31 may comprise a peripheral edge 35. The peripheral edge 35 of the splitting element 31 may be configured to abut an inner surface of the cylindrical wall 16 of the container 3. Thus, the peripheral edge 35 of the splitting element 31 may seal against the cylindrical wall 21 of the container 3 such that the flow of water can only leave the inlet section 32 of the container 3 and enter the outlet section 33 of the container 3 via the central aperture 34 in the splitting element 21.

As a result of water having to flow from the central aperture 34 of the splitting element 31 to an outlet 6 in the cylindrical wall 21 of the container 3, the flow of water through the outlet section 33 becomes cyclonic. That is, the water flows in a generally circumferential direction. The cyclonic flow of water encourages the release of gases dissolved within the water int eh water treatment unit 1.

As mentioned above, the water treatment unit 1 may comprise a magnet 7. In the embodiment depicted, the water treatment unit 1 comprises a single magnet 7. The magnet 7 may be cylindrical in shape. However, it will be appreciated that in alternative embodiments, the water treatment 1 may comprise a plurality of magnets 7.

As shown in Fig. 3 and Fig. 4, the magnet 7 may be located between the inlet 5 and the central aperture 35. Thus, the flow of water that enters the inlet section 32 of the container 3 from the inlet 5 must first flow past the magnet 7 before exiting the inlet section 32 through the central aperture 35 to enter the outlet section 33. Therefore, any ferrous particles in the flow of water can be removed by the magnet 7 through magnetism before the flow of water reaches the outlet section 33. In this way, the magnet 7 may protect other components of the water treatment unit, such as the sacrificial anode 8, from ferrous particles in the flow of water through the water treatment unit 1.

The magnet 7 may be located proximate to the bottom wall 23 of the container 3. The magnet 7 may extend from outside the container 3 through the bottom wall 23 and into the inlet section 32 of the container 3. The magnet 7 may be orientated such that its longitudinal axis extends parallel to the longitudinal axis L of the container 3. The magnet 7 may be configured to attract and hold ferrous particles, via magnetism, in the flow of water through the lower section 33 of the water receiving space 4 in the container 3. Therefore, the magnet 7 may be configured to remove ferrous particles from the flow of water through the water treatment unit 1.

The magnet 7 may be a dry magnet. The magnet 7 may be formed from neodymium. Optionally, the magnet 7 may be formed from neodymium with a stainless steel coating. The stainless steel coating may increase the durability of the magnet 7 and make maintenance of the at least one magnet 7 easier.

The magnet 7 may be located within a magnet housing 36 The magnet housing 36 may comprise a body 37. The body 37 of the magnet housing 36 may extend from the bottom wall 23 of the container 3 into the inlet section 32 of the water receiving space 4 of the container 3. The body 37 of the magnet housing 36 may have a similar shape to the magnet 7. That is, the body 37 of the magnet housing 36 may be cylindrical. The body 37 of the magnet housing 36 may be hollow. As shown in Fig. 3, the body 37 of the magnet housing 36 may comprise an aperture 38 at its end outside of the container 3 forming an open end. The aperture 38 in the magnet housing 36 may be configured to prevent the water in the water treatment unit 1 from contacting the magnet 7. Thus, the ferrous particles in the water may abut and be held against the magnet housing 36, by the magnetic force of the magnet 7 in the magnet housing 36, without contacting or damaging the magnet 7.

The magnet housing 36 may further comprise a cap 39. The cap 39 may be configured to close the end of the body 37 of the magnet housing 36 located outside of the container 3. The cap 39 may be configured to retain the magnet 7 in the magnet housing 36, during use. The cap 39 and body 37 of the magnet housing 36 may comprise complimentary locking features (not shown).

When the magnet 7 is housed in the magnet housing 36, the magnet 7 may be removed from the magnet housing 36 which may cause the ferrous particles on the magnet housing 36 to fall into the water in the container 3. The magnet 7 may be removed from the magnet housing 36 by an operator pulling on a handle (not shown) located on one end of the magnet 7 closest to the opening of the aperture 38 of the magnet housing 36.

In some embodiments, the magnet 8 may have a strength of at least 35. That is, the maximum energy product or BHmax represented in Mega Gauss Oersteds (MGOe) may be at least 35 or 35 kgf. In some embodiments, the magnet 8 may have a strength of at least 45. That is, the maximum energy product or BHmax represented in Mega Gauss Oersteds (MGOe) may be at least 45 or 45 kgf.

As shown in Fig. 4, the water treatment unit 1 may further comprise a drain 41. The drain 41 may be located in the bottom wall 23 of the container 3. That is, the drain 41 may comprise an aperture 42 in the bottom wall 23 of the container 3. By placing the drain 41 at the bottom of the container 3 it is possible to remove all of the water and any products in the water from the container 3.

The drain 41 may comprise a drain pipe 43 and a drain valve 44. The drain pipe 43 may be configured to connect the aperture 42 in the bottom wall 23 of the container 3 to an existing drain manifold or pipe. The aperture 42 may be generally circular, although it will be appreciated that the aperture 42 may take any shape. The drain valve 44 may be located along the drain pipe 43. The drain valve 44 may be configured to be opened to allow the container 3 of the water treatment unit 1 to be drained or flushed out. The drain valve 44 may be connected to a handle 45. The handle 45 may be configured to allow manual opening and closing of the drain valve 44.

As shown in Fig. 3 and Fig. 4, the sacrificial anode 8 is located in the outlet section 33 of the water receiving space 4 inside the container 3. That is, the sacrificial anode 8 may be located on the opposite side of the splitting element 35 to the magnet 7. In some embodiments, such as the one illustrated, the water treatment unit 1 may comprise a single sacrificial anode 8. However, it will be appreciated that in alternative embodiments, the water treatment unit 1 may comprise a plurality of sacrificial anodes 8.

The sacrificial anode 8 may be generally cylindrical. The sacrificial anode 8 may be elongate. That is, the sacrificial anode 8 may have a larger length dimension than its width or depth. The sacrificial anode 8 may be orientated such that its longitudinal axis extends parallel to the longitudinal axis L of the container 3. In some embodiments, the central longitudinal axis of the sacrificial anode 8 and the longitudinal axis of the container 3 may coincide such that the sacrificial anode 8 is concentric with the container 3. The sacrificial anode 8 may extend over substantially the entire length of the outlet section 33 of the container 3. In some embodiments, the sacrificial anode 8 may extend over at least half of the length of the outlet section 33 of the container 3.

The sacrificial anode 8 may be attached to the container 3 of the water treatment unit 1 by a connecting arm 47. The connecting arm 37 may be configured to provide an electrical connection between the container 3 of the water treatment unit 1, acting as a cathode, and the sacrificial anode 8. The connecting arm 37 may extend vertically downwards from the top wall 22 of the container 3.

The sacrificial anode 8 may be formed from a metal alloy with a more 'active; voltage than the material of the features of the water system 100 and the water treatment unit 1. That is, the sacrificial anode 8 may have more negative reduction potential or more positive electrode potential than the other components of the water treatment unit 1 and/or water system 100. Thus, the anode 8 is sacrificial in the sense that the anode material is configured to be consumed during the process of improving the quality of the water that flows through the water treatment unit 1. The anode is dissolved in the water, which scavenges oxygen in the water and increases the pH of the water. The oxygen in the water is scavenged by reacting with the material of the sacrificial anode 8. The products of this reaction provides inorganic salts in the water, which increase the pH of the water. The lower oxygen content and higher pH of the water reduces the reactions taking place between the water and components of the water treatment unit 1 and the water system 100.

In the present embodiment, the sacrificial anode 8 may be formed from magnesium. The sacrificial anode 8 may be formed using high potential magnesium anodes. Alternatively, the sacrificial anode 8 may be formed from, for example, but not limited to, a magnesium alloy, aluminium, an aluminium alloy, zinc, or a zinc alloy.

Thus, the corrosion process may be inhibited within the water treatment unit 1 because the oxygen in the water and the water react with the sacrificial anode 8 instead of the iron and steel elements of the water treatment unit 1 and the water system 100 due to the presence of the more 'active' sacrificial anode 8. This reduces the oxygen content of the water. This also produces reaction products, such as, for example, magnesium hydroxide, which increase the pH level of the water and reduces corrosion.

Furthermore, it will be appreciated that the use of the magnet 7 and the sacrificial anode 8 may removed minerals and salts from the flow of water, which in turn reduces the electrical conductivity of the water, and this inhibits corrosion.

In the illustrated embodiments, the sacrificial anode 8 may be unmeshed. That is, the sacrificial anode 8 may not be surrounded by a mesh. An advantage associated with an unmeshed sacrificial anode 8 is that there is less disruption of the flow of water to the sacrificial anode 8. In the present invention, a meshed sacrificial anode 8 is not essential because the water treatment unit 1 has a built in filter 9 that may filter out particles and detritus such as any magnesium oxide from the sacrificial anode 8 in the flow of water and prevent the particles and detritus from entering the water system 100. However, it will be appreciated that in an alternative embodiment, the sacrificial anode 8 may be a meshed sacrificial anode 8. That is, the sacrificial anode 8 may be surrounded by a mesh (not shown). The mesh may be configured to act as a filter. That is, the mesh may be configured to prevent magnesium oxide formed on the sacrificial anode 8 from entering the flow of water through the water treatment unit 1.

As shown in Fig. 3 and Fig. 4, the water treatment unit 1 may comprise a filter element 9. In the present embodiment, the filter element 9 may be located in the outlet section 33 of the water receiving space 4 of the container 3. The filter element 9 may extend from the splitting element 31 up into the outlet section 33 of the container 3. As shown in the illustrated embodiment, the filter element 9 may extend from a surface of the splitting element 31 on the outlet side of the container 3. The filter element 9 may also extend to the top wall 22 of the container 3. That is, the filter element 9 may extend along the entire length of the outlet section 33 of the container 3.

The filter element 9 may be a cylindrical filter element 9. That is, the filter element 9 may extend completely around the central aperture 34 in the splitting element 31. This, the flow of water into the outlet section 33 of the container may not exit the outlet 5 of the container without passing through the filter element 9. Furthermore, the filter element 9 may extend circumferentially around the sacrificial anode 8. Thus, any ferrous particles that are not held by the magnet 8 or loose products resulting from a reaction on the sacrificial anode 8 can be filtered out of the flow of water through the water treatment unit 1 by the filter element 9. Therefore, any material that escapes from the magnet 7 or sacrificial anode 8 can be prevented from exiting the container 3 of the water treatment unit 1 through the outlet 6.

In the present embodiment, the filter element 9 may be a hollow cylindrical filter element 9. That is, the filter element 9 may be formed by a filter screen. The filter element 9 may be formed by a 40 um screen. It will be appreciated that in other embodiments the filter element 9 may be formed by a 55 um screen or a 110 um screen. In addition, the filter element 9 may be formed from a stainless steel mesh. That is, in the present embodiment, the filter element 9 may be formed by a cylindrical stainless steel mesh screen that may have apertures capable of filtering detritus out of the flow of water that are larger than 40 um.

The filter element 9 may comprise a double screen arrangement. That is, the filter element 9 may comprise an internal cylindrical mesh and an outer cylindrical mesh that are concentric with each other. The internal and external meshes may have the same or different sized apertures. The internal and external meshes may be offset so as to provide even smaller gap sizes.

The filter element 9 may be electrically connected to the container 3. Thus, the surface area of the cathode can be increased. As a result, a higher rate of reaction of particles and gases in the water with the sacrificial anode can be achieved. Consequently, the water treatment unit 1 may provide superior performance in improving the quality of the water flowing through the container 3.

As shown in Fig. 3 and Fig. 4, the water treatment unit 1 may further comprise an air vent 51. The air vent 51 may be located in the top wall 22 of the container 3. The air vent 51 may extend from the outlet section of the container 3 through the top wall 32 of the container, through any layer of insulation present, and through the housing 2. The air vent 51 may be an automatic air vent 51. The automatic air vent 51 may be configured to allow gases separated from the flow of water to be vented out of the container 3 when the pressure in the container 3 when the gases reach the automatic air vent 51. That is, the automatic air vent 51 may be configured to open when air reaches it. The automatic air vent 51 may be configured to close when water reaches it. In some embodiments, the air vent 51 may open when the pressure in the container 3 exceeds a predetermined level. The air vent 51 may also allow gases created as a product of the water reacting with the sacrificial anode 8 to be vented out of the container 3. The gases may be hydrogen. That is, the air vent 51 may be configured to allow gases in the form of micro bubbles to exit the container 3.

In some embodiments, the air vent 51 may comprise a vent pipe 52. The vent pipe 52 may comprise a vent valve 53. The vent valve 53 may be installed at the end of the vent pipe 52 located outside of the housing 2. The vent valve 53 may be an automatic valve configured to open automatically once a predefined pressure threshold has been exceeded.

Referring to Fig. 5, the water treatment unit 1 can be incorporated into an existing water system 100 or included in a new water system, both schematically represented in Fig. 5. Water from the water system 100 may flow into the container of the water treatment unit 1 via the inlet 5.

Referring back to Figs. 3 and 4, the process of improving the quality of the water in the water system 100 using the water treatment unit 1 will now be described. When the water enters the inlet 5 to the container 3, the water may impinge on the magnet 7. The magnet 7 attracts ferrous particles within the water and holds them, via magnetism, against the magnet housing 36, or magnet 7 where a magnet housing 36 is not present, thus removing the ferrous particles from the flow of water.

In some embodiment, the magnet housing 36, or magnet 7, may be used as a flow diverter. That is, the magnet housing 36, or magnet 7, may be used to direct generally radially flowing water entering the inlet section 32 of the container 3 into a more generally circumferential flow path. Thus, a cyclonic water flow path may be generated. The water then flows inwards towards the aperture 34 in the splitting element 31 and up into the outlet section 33 of the container 3.

The change in direction of the flow of water caused by the magnet 7 or magnet housing 36 may cause turbulence in the flow of water, and may induce a vortex when the magnet 7 or magnet housing 36 is used as a flow director. Thus, some gases dissolved the water can be released and will rise up the water receiving space 4 of the container to the air vent 51.

As the water is force upwards into the outlet section 33 of the container 3, it flows past the sacrificial anode 8. Any remaining gases or reactive particles in the water may react with the sacrificial anode 8. This results in a lower oxygen content in the water and inhibits corrosion by removing reactants of the corrosion reaction and raising the pH levels of the water.

In order for the water to flow out of the outlet 6 of the container 3, the water must flow though the filter element 9. At this stage, detritus and sludge remaining in the water are filtered out of the flow of water. This may remove minerals etc from the water which reduces the conductivity of the water and further inhibits corrosion.

Once the flow of water has passed through the filter element 8, it is then free to exit the container through the outlet 6. Thus, the water that leaves the water treatment unit 1 is of a better quality than the water that entered the water treatment unit 1 because it has a lower oxygen content, a higher pH, and less mineral content - therefore less conductivity. Each of these parameters help to provide water that is less likely to cause corrosion of elements of a water system 100.

Furthermore, the water treatment unit 1 is able to improve the quality of the water within the water system 100 without the use of chemicals or external power and with minimum maintenance.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the inventions as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be in the future.

## Claims

1. A water treatment unit for improving the quality of water in a water system; the water treatment unit comprising:
a container having an inlet and an outlet configured to allow water to flow into and out of the container, respectively, wherein the outlet is located above the inlet;
a magnet configured to attract ferrous particles and retain ferrous particles to remove the ferrous particles from the water flowing through the container;
a sacrificial anode configured to provide cathodic protection and scavenge oxygen from the water flowing through the container; and
a filter element configured to remove detritus from the water flowing through the container;
wherein the magnet, sacrificial anode, and filter element are located within the container.

2. The water treatment unit according to claim 1, wherein the container comprises a splitting element that extends across the container and divides the container into an inlet section comprising the inlet and an outlet section comprising the outlet, wherein the splitting element comprises an aperture configured to allow water to flow from the inlet section of the container to the outlet section of the container.

3. The water treatment unit according to claim 2, wherein the sacrificial anode is located in the outlet section of the container.

4. The water treatment unit according to claim 2 or claim 3, wherein the filter element is located in the outlet section of the container.

5. The water treatment unit according to claim 4, wherein the filter element extends from the splitting element into the outlet section of the container.

6. The water treatment unit according to claim 5, wherein the filter element extends from the splitting element to a top wall of the container, and optionally, wherein the filter element is a hollow cylindrical filter element configured such that the water flowing through the container has to pass through the filter element before the water can exit through the outlet.

7. The water treatment unit according to claim 5 or claim 6, wherein the filter element is a 40 um screen, and optionally, wherein the filter element is formed from a stainless steel mesh, and optionally, wherein the filter element is electrically connected to the container to increase the cathodic surface of the water treatment unit.

8. The water treatment unit according to claim 7, wherein the sacrificial anode is located within the hollow cylindrical filter element, and optionally, wherein the sacrificial anode is located above the aperture in the splitting element.

9. The water treatment unit according to any one of the preceding claims, wherein the sacrificial anode is an unmeshed anode.

10. The water treatment unit according to any one of the preceding claims, wherein the sacrificial anode is formed from magnesium.

11. The water treatment unit according to any one of the preceding claims, wherein the magnet is located in the inlet section of the container, and optionally, wherein the magnet is located proximate to the inlet of the container.

12. The water treatment unit according to claim 11, wherein the magnet is located in a magnet housing, and optionally, wherein the magnet housing extends into the inlet section of the container from the bottom wall of the container.

13. The water treatment unit according to claim 11 or claim 12, wherein the magnet or magnet housing is a flow diverter configured to induce a vortex in the water flowing into the inlet section of the container to improve separation efficiency.

14. The water treatment unit according to any one of the preceding claims, wherein at least one of the following:
the magnet is formed from neodymium, and optionally comprises a stainless steel coating,
the water treatment unit further comprises a drain located in a bottom wall of the container, the drain comprising a drain pipe and a drain valve configured to allow the container to be drained, and
the water treatment unit further comprises an air vent located in the top wall of the container, the air vent being configured to allow micro bubbles to exit the container.

15. A water system comprising a water treatment unit according to any one of the preceding claims.
